# EUROPÄISCHE PATENTSCHRIFT

(11) **EP 1 932 620 B1**
(45) Veröffentlichungstag und Bekanntmachung des Hinweises auf die Patenterteilung: **29.09.2010**
(21) Anmeldenummer: 06025678.1
(22) Anmeldetag: 12.12.2006
(51) Int. Cl.: B24B 33/02, B24B 33/08, B24B 33/10, B24B 45/00

(54) **Verfahren zur Feinbearbeitung zylindrischer Innenflächen von Bohrungen sowie Feinbearbeitungsanlage hierfür**
Method finishing of cylindrical inner surfaces of bores and finishing apparatus therefore
Procédé de finissage des surfaces internes d'alésages et dispositif de finition adapté

(43) Veröffentlichungstag der Anmeldung: 18.06.2008
(73) Patentinhaber: Nagel Maschinen- und Werkzeugfabrik GmbH, 72622 Nürtingen (DE)
(72) Erfinder: Nagel, Wolf, 72631 Aichtaal-Aich (DE); Schüle, Peter, 72622 Nürtingen (DE); Roth, Karl Günther, 71332 Waiblingen (DE); Weigmann, Uwe-Peter, 72622 Nürtingen (DE)
(74) Vertreter: Patentanwälte Ruff, Wilhelm, Beier, Dauster & Partner

(56) Entgegenhaltungen:
- EP-A- 0 586 791
- DE-A1- 3 219 629
- DE-A1- 3 336 627
- GB-A- 1 207 399
- US-A1- 2004 048 558

## Beschreibung

Die Erfindung bezieht sich auf ein Verfahren zur Feinbearbeitung zylindrischer Innenflächen von Bohrungen in Werkstücken sowie auf eine zur Durchführung des Verfahrens geeignete Feinbearbeitungsanlage. Bevorzugtes Anwendungsgebiet ist die Feinbearbeitung von im Wesentlichen zylindrischen Gleitlagerflächen in Bauteilen für den Motorenbau, insbesondere die Bearbeitung von Zylinderlaufflächen eines Motorblockes.

Das klassische Honen ist ein Zerspanungsverfahren mit geometrisch unbestimmten Schneiden, bei dem vielschneidige Honwerkzeuge eine aus zwei Komponenten bestehende Schnittbewegung ausführen, die zu einer charakteristischen Oberflächenstruktur der bearbeiteten Innenfläche mit überkreuzten Bearbeitungsspuren führt. Durch Honen sind endbearbeitete Oberflächen herstellbar, die extrem hohen Anforderungen bezüglich Maß- und Formtoleranzen sowie hinsichtlich der Oberflächenstruktur genügen. Dementsprechend werden beispielsweise beim Motorenbau Zylinderlaufflächen, d.h. Innenflächen von Zylinderbohrungen in einem Motorblock oder in einer in einen Motorblock einzubauenden Zylinderhülse, Lagerflächen für Wellen und die zylindrischen Innenflächen in Pleuelaugen einer Honbearbeitung unterzogen.

Die Feinbearbeitung erfolgt üblicherweise in mehreren, aufeinanderfolgenden Bearbeitungsstufen.

Eine Vorbearbeitung der Bohrung in einer Vorbearbeitungsstufe dient im wesentlichen dazu, die gewünschte Position und Winkellage der Bohrung festzulegen. Hierzu wird in der Vorbearbeitungsstufe eine vorbearbeitete Bohrung erzeugt, die gegenüber der gewünschten fertigbearbeiteten Bohrung ein Untermaß hat, das in nachfolgenden Bearbeitungsstufen unter Erzeugung der gewünschten Makroform der Bohrung und der gewünschten Oberflächenstruktur der Bohrungsinnenfläche noch abgetragen wird. Die Vorbearbeitung kann mit Hilfe des Feinbohrens erfolgen, das manchmal auch als Feindrehen oder Feinspindeln bezeichnet wird. Typische Abträge beim Feinbohren können beispielsweise im Bereich zwischen 0,5 und 1 mm (bezogen auf den Durchmesser) liegen. Es ist auch schon vorgeschlagen worden, das Feinbohren durch den Prozess des "Schrupphonens" zu ersetzen (vergleiche z. B. Fachartikel "Spanende Bearbeitung von Gußeisen mit Vermikulargraphit" von J. Schmid in: konstruieren + gießen 22 (1997) Nr. 4, Seiten 22 bis 38 oder Fachartikel "Honen - Fortschritte durch optimierte Werkzeuge und Prozesse" von U. Klink und G. Flores in: VDI-Z 143 (2001), Nr. 6, Seiten 49 bis 56). Das Schrupphonen ist eine Verfahrensvariante des Honens mit Spanleistungen, die mit den Spanleistungen konventioneller Feinbohrverfahren vergleichbar sind, wobei jedoch aufgrund der kontinuierlichen Selbstschärfung der Schneidkörper höhere Standmengen erzielbar sind. Üblicherweise werden relativ grobkörnige Diamant-Honleisten verwendet. Typische Abträge beim Schrupphonen können z.B. im Bereich zwischen 0,3 und 0,5 mm bezogen auf den Durchmesser der Bohrung liegen.

Nachdem in der Vorbearbeitungsstufe die gewünschte Position und Winkellage der Bohrung im Wesentlichen festgelegt ist, wird die nachfolgende Bearbeitung so durchgeführt, dass bei einem im Vergleich zur Vorbearbeitung geringerem Aufmaß eine fertig bearbeitete Bohrung erzeugt wird, die die Anforderungen insbesondere bezüglich Zylinderform, Durchmesser und Oberflächenstruktur erfüllt.

Bei der nachfolgenden Bearbeitung werden typischerweise mehrere, unterschiedliche, aufeinanderfolgende Honoperationen durchgeführt. Dabei wird eine üblicherweise als "Vorhonen" bezeichnete Honoperation mit relativ grobkörnigen Schneidkörpern (mittlere Korngröße z.B. zwischen 91 µm und 251 µm) und hoher Zerspanleistung dazu ausgelegt, die gewünschte Makroform der Bohrung weitgehend festzulegen und den aus der Vorbearbeitung resultierenden Formfehler sowie die Durchmesserstreuung zu verringern. Typische Abträge beim Vorhonen können beispielsweise zwischen 40 µm und 70 µm (bezogen auf den Durchmesser der Bohrung) liegen (vergleiche z. B. Fachartikel "Neues Honverfahren für umweltfreundliche Verbrennungsmotoren" von G. Haasis und U.-P. Weigmann in: WB Werkstatt und Betrieb, Jahrgang 132 (1999) 3, Seiten 29 bis 35 oder DE 196 27 926 A1 oder o.g. Fachartikel: Honen - Fortschritte durch optimierte Werkzeuge und Prozesse"). Typische Rauheiten R_{z} können nach dem Vorhonen z.B. im Bereich von 9 µm bis 26 µm liegen.

Dem Vorhonen werden ein oder mehrere weitere Bearbeitungsoperationen mit Schneidkörpern feinerer Körnung und entsprechend geringerem Materialabtrag nachgeschaltet, um mit insgesamt relativ geringem Materialabtrag die am fertigen Werkstück benötigte Soll-Oberflächenstruktur zu erzeugen. Sofern diese Bearbeitung in einer einzigen Honoperation durchgeführt wird, spricht man häufig von "Fertighonen". Wird die Bearbeitung in zwei oder mehr Bearbeitungsoperationen unterteilt, wird die dem Vorhonen unmittelbar nachfolgende Operation in der Regel als "Zwischenhonen" bezeichnet, an die sich eine Endbearbeitungsoperation anschließen kann, die im wesentlichen ohne Materialabtrag (Abtrag z.B. weniger als 8 µm) die aus der Zwischenhonoperation resultierende Oberflächenstruktur noch optimiert. Die abschließende Bearbeitungsoperation kann beispielsweise als "Plateauhonung" oder durch das Verfahren des "Gleithonens" realisiert werden. Als abschließende Bearbeitungsoperation für höchste Oberflächengüten kann auch das Feinhonen eingesetzt werden, mit dem typischerweise Rauheiten R_{z} < 2µm erzielbar sind. Bei der Bearbeitung von Leichtmetalllegierungen, die eingelagerte Hartstoffphasen enthalten, kann als letzte Bearbeitungsoperation auch das "Freilegungshonen" zum Freilegen von Hartstoffphasen eingesetzt werden (vgl. z.B. DE 196 27 926 A1).

Für die verschiedenen Bearbeitungsstufen werden unterschiedliche Bearbeitungswerkzeuge benötigt, die einerseits im Hinblick auf ihre Abtragsleistung und andererseits im Hinblick auf die erzielbare Qualität der bearbeiteten Bohrung, insbesondere im Hinblick auf Oberflächenrauheit, Zylinderform der Bohrung und Maßstreuung der Bohrung auszuwählen sind. Hierdurch können mehrere Werkzeugwechsel und/oder der Einsatz doppelt aufweitender Honwerkzeuge und/oder mehrere Wechsel zwischen unterschiedlichen Bearbeitungsstationen notwendig werden, wodurch sich relativ lange Prozessketten ergeben können.

Die Europäische Patentanmeldung EP 0 586 791 A1 offenbart ein Feinbearbeitungsanlage sowie einen zweistufigen Honprozess, mit dem vermieden werden soll, eine abschließende Bürstoperation an einer anderen Bearbeitungsstation auszuführen. Der Honprozess wird mit einem einzigen Honwerkzeug durchgeführt, an dem für die anfängliche Phase raue Honsteine und für die abschließende zweite Phase besondere Finishwerkzeuge vorgesehen sind, die eine dichte Packung von Schleifmitteln mit Kunststofffasem aufweisen. Die beiden Phasen des Prozesses können zeitlich ineinander übergehen, zeitlich versetzt zueinander liegen oder einander zeitlich überlappen. Mit dem Honprozess sollen die bearbeiteten Ölhalteflächen eine verbesserte Plateaustruktur und Oberflächentopographie erhalten. Außerdem sollen durch den Prozess abrasive Verunreinigungen vermieden werden, die durch harte Finishwerkzeuge entstehen. Diese Vorteile sollen auf wirtschaftliche Weise erreicht werden.

Es ist eine Aufgabe der vorliegenden Erfindung, unter Beibehaltung der bei konventionellen Feinverarbeitungsverfahren erzielbaren Qualität der fertig bearbeiteten Bohrung die Prozesskette zu verkürzen.

Zur Lösung dieser und anderer Aufgaben stellt die Erfindung ein Verfahren mit den Merkmalen von Anspruch 1 sowie eine Feinbearbeitungsanlage mit den Merkmalen von Anspruch 20 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Das Verfahren zur Feinbearbeitung einer im wesentlichen zylindrischen Innenfläche einer Bohrung in einem Werkstück dient zur Erzeugung einer fertig bearbeiteten Bohrung, die ein Soll-Maß und eine Soll-Oberflächenstruktur hat. Das Soll-Maß kann beispielsweise durch Angaben hinsichtlich Bohrungsdurchmesser und Zylinderformfehler, und gegebenenfalls durch definierten Abweichungen von einer idealen Zylinderform definiert sein. Diese Soll-Oberflächenstruktur wird üblicherweise durch Angaben geeigneter Oberflächen-Kenngrößen definiert, z.B. bestimmter Rauheitswerte.

In einer Vorbearbeitungsstufe wird in dem Werkstück, beispielsweise einem gegossenen Motorblock, eine vorbearbeitete Bohrung erzeugt, die gegenüber der gewünschten fertig bearbeiteten Bohrung bezogen auf einen Durchmesser der Bohrung ein Untermaß von mindestens 70µm hat. Die Vorbearbeitung dient im Wesentlichen dazu, die gewünschte Position und Winkellage der Bohrung festzulegen. Gewisse Streuungen der Bohrungsdurchmesser und Formfehler sind hier zulässig. Die Vorbearbeitung der Bohrung kann beispielsweise mittels Feinbohren oder durch Schrupphonen oder durch eine Kombination dieser Verfahren durchgeführt werden. Vorzugsweise wird nur ein einziges Vorbearbeitungsverfahren verwendet, z.B. das Feinbohren.

Unmittelbar nach der Vorbearbeitung, d.h. ohne weiteren zwischenliegenden Bearbeitungsschritt, wird eine Leistungsfeinhonbearbeitung der vorbearbeiteten Bohrung mit Hilfe eines aufweitbaren Honwerkzeuges durchgeführt, um eine leistungsfeingehonte Bohrung zu erhalten. Diese Leistungsfeinhonbearbeitung findet in einer einzigen Leistungsfeinbearbeitungsstufe statt, kann also an einer einzigen Bearbeitungsstation ohne Werkzeugwechsel durchgeführt werden. Bei der Leistungsfeinhonbearbeitung werden mindestens 90% des nach der Vorbearbeitung resultierenden Untermaßes durch Honen abgetragen. Die Leistungsfeinhonbearbeitung kann somit in einer einzigen Leistungsfeinhonbearbeitungsstufe zu einer leistungsfeingehonten Bohrung führen, deren Bohrungsmaß, gegebenenfalls bis auf geringe Abweichungen, bereits dem Soll-Maß entspricht. Für die Leistungsfeinhonbearbeitung wird ein Honwerkzeug mit Schneidkörpern feiner Körnung verwendet, wobei die Schneidkörper so ausgelegt sind, dass eine nach der Leistungsfeinhonbearbeitung resultierende Oberflächenstruktur der leistungsfeinhonbearbeiteten Bohrung im Wesentlichen oder vollständig der Soll-Oberflächenstruktur der fertig bearbeiteten Bohrung entspricht.

Hinsichtlich des erzielbaren Abtrages kann die Leistungsfeinhonbearbeitungsstufe somit so ausgelegt werden, dass Abträge erzielt werden, die bei konventionellen Verfahren durch mindestens zwei aufeinanderfolgende Bearbeitungsstufen, nämlich das Vorhonen und das Zwischenhonen (bzw. Fertighonen) erzielt wurden. Gleichzeitig wird durch die Verwendung von Schneidkörpern mit relativ feiner Körnung sichergestellt, dass nach Abschluss der Leistungsfeinhonbearbeitung an der Innenfläche der mittels Leistungsfeinhonen fein bearbeiteten Bohrung eine Oberflächenstruktur vorliegt, die weitgehend oder vollständig der gewünschten Soll-Oberflächenstruktur entspricht.

Bisher war man bei der Prozessauslegung davon ausgegangen, dass für hohe Abtragsleistungen, wie sie beispielsweise beim Vorhonen angestrebt werden, Schneidkörper mit relativ grober Körnung zu verwenden sind, die dementsprechend raue Oberflächen erzeugen. Daher wurden Bearbeitungsstufen mit Schneidkörpern feinerer Körnung nachgeschaltet, die die relativ raue Oberfläche in eine feinere Oberflächenstruktur überführen, jedoch bei relativ geringem Aufmaß, das bei typischen Verfahren des "Zwischenhonens" beispielsweise bei maximal 30µm liegen konnte. Die Leistungsfeinhonbearbeitungsstufe beim erfindungsgemäßen Verfahren vereinbart somit zwei bisher für unvereinbar gehaltene Anforderungen an die Feinbearbeitung, nämlich einerseits die Anforderung nach hohem Abtrag in relativ kurzer Bearbeitungszeit, und andererseits die Anforderung nach einer definierten, relativ feinen Oberflächenstruktur nach Abschluss der Leistungsfeinhonbearbeitung. Beide Forderungen können in nur einer einzigen Leistungsfeinhonbearbeitungsstufe mit Hilfe eines einzigen, aufweitbaren Honwerkzeuges erzielt werden, so dass sich erhebliche Verkürzungen der Prozesskette ergeben.

Bei manchen Ausführungsformen wird die Leistungsfeinhonbearbeitung für eine Bohrung mit Durchmesser D innerhalb einer Honzeit H durchgeführt, für die die Bedingung H < 35 s * D/75 gilt. So kann beispielsweise die Honzeit für Bohrungen mit einem Durchmesser von bis zu 80 mm bei 40 Sekunden (s) oder darunter liegen. Bei Bohrungsdurchmessern zwischen 80 mm und 130 mm können typische Honzeiten von weniger als 50 Sekunden erreicht werden. Im allgemeinen dauert die Bearbeitung bei größeren Durchmessern, bei denen auch die Bohrungen in der Regel länger sind, etwas länger als bei niedrigeren Bohrungsdurchmessern. Im Vergleich zu herkömmlichen zweistufigen Verfahren ergeben sich somit erhebliche Vorteile hinsichtlich der Gesamtprozesszeit.

Bei manchen Ausführungsformen werden bei der Leistungsfeinhonbearbeitung ausschließlich Schneidkörper mit Schneidkörnern relativ feiner Körnung und mittlerer Korngrößen zwischen ca. 30µm bis 35µm und ca. 90µm verwendet, wobei die mittleren Korngrößen vorzugsweise im Bereich von weniger als 80µm oder weniger als 70µm liegen können, insbesondere zwischen 35µm und 65µm. Beispielsweise können Schneidkörner vom Typ D35, D46, D54, D64 oder D76 oder geeignete Zwischenstufen verwendet werden. Die Verwendung von Schneidkörpern mit Diamant-Schneidkörnern hat sich als besonders vorteilhaft herausgestellt, es können jedoch auch Schneidmittel mit Schneidkörnern aus kubischem Bornitrid (CBN) oder mit keramischen Schneidkörnern verwendet werden.

Bei manchen Ausführungsformen wird die Leistungsfeinhonbearbeitung so durchgeführt, dass die nachbearbeitete Bohrung im Wesentlichen das Soll-Maß und die Soll-Oberflächenstruktur hat. Somit ist keine der Leistungsfeinhonbearbeitung folgende Endbearbeitungsstufe mehr nötig, wodurch ein sehr schnell durchführbarer zweistufiger Feinbearbeitungsprozess geschaffen wird.

Bei anderen Ausführungsformen wird die nach der Leistungsfeinhonbearbeitung resultierenden Oberflächenstruktur in einer nachgeschalteten Endbearbeitungsstufe im Wesentlichen ohne Veränderung des Bohrungsmaßes in die Soll-Oberflächenstruktur überführt. Beispielsweise kann die nach der Leistungsfeinhonbearbeitung resultierende Oberflächenstruktur durch Plateauhonen und/oder durch Bürsthonen in die Soll-Oberflächenstruktur überführt werden. Durch die abschließende Bearbeitungsoperation können z.B. Spitzenbereiche der aus der Leistungsfeinhonbearbeitung resultierenden Basisrauhigkeit noch abgetragen werden, wodurch insbesondere eine Verminderung der Rₚₖ- und Rₖ-Werte erreicht werden kann. Die Endbearbeitungsoperation kann im Wesentlichen ohne Materialabtrag erfolgen, insbesondere mit einem Materialabtrag von weniger als 8 µm und/oder weniger als 5 µm (bezogen auf den Durchmesser).

Ein typisches Merkmal für solche Endbearbeitungsoperationen ist es, dass hier nicht gezielt ein neuer Durchmesser eingestellt bzw. bearbeitet wird. Daher werden hier typischerweise keine In-Prozess-Durchmessersysteme nötig. Vielmehr kann die Stärke der Modifikation der Oberfläche über die Honzeit und/oder über die Anzahl der Hübe gesteuert werden.

Bei manchen Verfahrensvarianten wird für die gesamte Leistungsfeinhonbearbeitung ein Honwerkzeug mit einfacher Aufweitung verwendet, wodurch im Vergleich zur ebenfalls möglichen Verwendung von Honwerkzeugen mit Doppelaufweitung eine wesentlich einfachere Ansteuerung und eine weniger komplizierte Konstruktion der Honeinheit möglich ist.

Bei einer Verfahrensvariante wird die Vorbearbeitung der Bohrung, die zur Erzeugung einer vorbearbeiteten Bohrung führt, sowie die Leistungsfeinhonbearbeitung der vorbearbeiteten Bohrung mit Hilfe eines doppelt aufweitenden Honwerkzeuges durchgeführt. Dieses kann zwei unabhängig voneinander zustellbare Schneidgruppen mit entsprechend ausgelegten Schneidkörpern haben, wobei eine erste Schneidgruppe mit relativ grobkörnigen Schneidkörnern für die Vorbearbeitung der Bohrung und eine zweite Schneidgruppe mit im Vergleich dazu relativ feinkörnigen Schneidkörpern zur Leistungsfeinhonbearbeitung der vorbearbeiteten Bohrung ausgelegt ist. Zunächst kann mit der ersten Schneidgruppe die Vorbearbeitung durchgeführt werden. Ist diese abgeschlossen, weil das vorgegebene Untermaß von z.B. mindestens 70µm erreicht ist, so kann die erste Schneidgruppe zurückgezogen und die zweite Schneidgruppe zugestellt werden, die dann die Leistungsfeinhonbearbeitung durchführt, in der mindestens 90% des nach der Vorbearbeitung resultierenden Untermaßes abgetragen wird. Bei dieser Verfahrensvariante kann somit eine Bohrung auf einer einzigen Bearbeitungsstation bzw. mit einer einzigen Honspindel fertig bearbeitet werden, sofern sich nach der Leistungshonbearbeitung keine weitere Endbearbeitungsstufe anschließt.

Bei manchen Ausführungsformen wird bei der Leistungsfeinhonbearbeitung ein Aufmaß (bezogen auf den Durchmesser) von mindestens 60µm abgetragen, wobei das durch die Leistungsfeinhonbearbeitung abgetragene Aufmaß vorzugsweise mehr als 70µm oder mehr als 80µm oder mehr als 90µm beträgt. Bei diesen Verfahrensvarianten der Leistungsfeinhonbearbeitung kann somit der Materialabtrag deutlich über dem Abtrag konventioneller Zwischenhonoperationen liegen.

Bei manchen Verfahrensvarianten wird das Honwerkzeug während der Leistungsfeinhonbearbeitung zumindest innerhalb eines Bearbeitungszeitintervalls derart angetrieben, dass eine Schnittgeschwindigkeit der Schneidkörper relativ zur Innenfläche der Bohrung mehr als 90m/min beträgt. In manchen Fällen kann die Schnittgeschwindigkeit während des Bearbeitungszeitintervalls sogar mehr als 120m/min betragen. Bei der Prozessentwicklung hat sich herausgestellt, dass die bei der Leistungsfeinhonbearbeitung verwendbaren Schneidkörper feiner Körnung bei für das klassische Honen typischen Schnittgeschwindigkeiten von beispielsweise maximal 80m/min nur mäßige Abtragsleistungen haben, was zu einer Verlängerung der Bearbeitungszeit führen kann. Überraschenderweise hat sich jedoch herausgestellt, dass durch eine deutliche Steigerung der Schnittgeschwindigkeit auf mehr als 90m/min die Zerspanleistung deutlich erhöht werden kann, so dass trotz der feinen Körnung die für die Leistungsfeinhonbearbeitung gewünschten Abtragsleistungen erzielbar sind. Bisher war man davon ausgegangen, dass optimale Schnittgeschwindigkeiten verschiedener Schneidmittel beim Honen zum Teil bei deutlich niedrigeren Werten liegen und dass das spezifische Zerspanvolumen für jeden Schneidmitteltyp für eine gewisse Schnittgeschwindigkeit maximal wird und bei weiterer Steigerung der Schnittgeschwindigkeit wieder abnimmt (vgl. z.B. "Handbuch der Fertigungstechnik, Hrsg.: G. Spur, T. Stöferle, Carl Hanser Verlag (1980), Band 3/2 Spanen, Kapitel 14.6.4)

Es kann vorteilhaft sein, wenn die Schneidkörper des Honwerkzeuges während der Leistungsfeinhonbearbeitung nicht über die gesamte Bearbeitungsdauer mit einer für den Abtrag optimierten Schnittgeschwindigkeit bewegt werden. Bei manchen Verfahrensvarianten werden während der Leistungsfeinhonbearbeitung Schneidkörper des Honwerkzeuges während einer ersten Bearbeitungsphase mit einer ersten Schnittgeschwindigkeit von mehr als 90m/min und während einer nachfolgenden zweiten Bearbeitungsphase mit einer gegenüber der ersten Schnittgeschwindigkeit deutlich geringeren zweiten Schnittgeschwindigkeit bewegt. Die zweite Schnittgeschwindigkeit kann beispielsweise weniger als 80m/min oder weniger als 60m/min betragen. Die erste Schnittgeschwindigkeit kann mehr als 120m/min betragen.

Alternativ oder zusätzlich können die Schneidkörper des Honwerkzeuges während der Leistungsfeinhonbearbeitung in einer ersten Bearbeitungsphase zur Erzeugung eines ersten Abtrages mit einer ersten Zustellrate zugestellt werden und in einer der ersten Bearbeitungsphase folgenden zweiten Bearbeitungsphase zur Erzeugung eines zweiten Abtrages mit einer zweiten Zustellrate zugestellt werden, die geringer als die erste Zustellrate ist. In der ersten Bearbeitungsphase kann beispielsweise ein erster Abtrag von mindestens 50µm abgetragen werden, so dass hierdurch der überwiegende Anteil des in der Leistungsfeinhonbearbeitungsstufe abzutragenden Materiales abgetragen wird. Der zweite Abtrag kann beispielsweise maximal 15µm bis 20µm betragen, so dass gegen Ende der Leistungsfeinhonbearbeitungsstufe nur noch relativ geringe Abtragsleistungen erforderlich sind, die für die Erzielung einer feinen Oberflächenstruktur und geringer Formfehler günstig sind.

Bei Verfahrensvarianten mit einer abtragsoptimierten ersten Bearbeitungsphase und einer nachfolgenden, hinsichtlich der erzielbaren Oberflächenstruktur optimierten zweiten Bearbeitungsphase können die Schneidkörper nach Abschluss der ersten Bearbeitungsphase in einer Rückstellphase zurückgestellt werden und nach der Rückstellphase zur Einleitung der zweiten Bearbeitungsphase wieder zugestellt werden. Bei dieser Verfahrensvariante kann die zweite Bearbeitungsphase so ausgelegt sein, dass ausgehend von einer vollen Anlage der Schneidkörper nach Abschluss der ersten Bearbeitungsphase im Wesentlichen nur noch die gewünschten Honwinkel und die gewünschte Oberflächenrauheit der durch Leistungsfeinhonen bearbeiteten Bohrung in der zweiten Bearbeitungsphase eingestellt werden. Da in der zweiten Bearbeitungsphase nur noch wenig Materialabtrag erforderlich ist, kann diese Phase mit geringerem Anpressdruck der Schneidkörper durchgeführt werden, wodurch sich auch Formverbesserungen der erzielbaren Bohrungsform ergeben können.

Bei bevorzugten Verfahrensvarianten werden die Schneidkörper des Honwerkzeuges während der Leistungshonbearbeitung weggesteuert zugestellt. Hierdurch kann eine weitgehend konstante Eingriffstiefe der Schneidkörner erreicht werden. Auch eine kraftgesteuerte Zustellung ist möglich. In diesem Fall ist eine Regelung der Zustellkraft in Abhängigkeit von der Abtragsleistung empfehlenswert.

Für die Durchführung des Verfahrens können geeignete, konventionelle Honbearbeitungsanlagen eingesetzt werden. Es kann jedoch günstig sein, diese im Hinblick auf die bei bevorzugten Verfahrensvarianten auftretenden hohen Drehgeschwindigkeiten der Honspindel zu optimieren, um einen einwandfreien ruhigen Rundlauf des Werkzeuges sicherzustellen. Zu diesem Zweck kann anstelle üblicher Honspindeln, die zum Ausgleich von Achsversatz zwischen Honspindel und Bohrung häufig mit zwei Gelenken (oberes, werkzeugfernes Gelenk und unteres, werkzeugnahes Gelenk) ausgestattet sind, eine andere Konstruktion der Honspindel günstig sein. Beispielsweise kann anstelle der üblichen Gelenke auch eine starre Stange, ein Schwimmkopf, eine Biegestange oder eine Biegestange nur mit einem unteren Gelenk eingesetzt werden. Der Begriff "Biegestange" soll hierbei ein Verbindungselement zur Übertragung einer Drehbewegung von einer Honspindel auf ein Honwerkzeug bezeichnen, welches dazu ausgelegt ist, geringe Abweichungen von der Achsparallelität zwischen Honspindel und Honwerkzeug zu ermöglichen, ohne dass durch resultierende Kräfte die Ergebnisse des Honvorganges beeinträchtigt werden. Die Biegestange kann beispielsweise einen Rohrabschnitt umfassen, der eine Vielzahl von regelmäßig oder unregelmäßig angeordneten und sich über einen Teil der Rohrlänge und einen Teil des Rohrumfangs erstreckenden Öffnungen aufweist. Solche durchbrochenen Rohre haben bei geringer Masse eine hohe Steifigkeit und erlauben den gewünschten Achsversatz. Sie können beispielsweise kreisförmige, rautenförmige oder andersartig geformte Öffnungen haben, wie dies in den Patenten DE 32 19 629 C2 oder DE 33 36 627 C2 der Anmelderin beschrieben ist. Es kann auch ein dünnwandiges Rohr und/oder ein Rohr aus einem Material mit relativ zu Stahlwerkstoffen geringer Biegefestigkeit verwendet werden. Die Anbringung eines Gelenkes an der Biegestange möglichst in Nähe zum Honwerkzeug, z.B zwischen der Biegestange und dem Honwerkzeug (unteres Gelenk), kann günstig sein, da hierdurch die bei Achsversatz auftretenden Biegemomente auf das Werkzeug reduziert werden können.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele der Erfindung sind in den Zeichnungen dargestellt und werden im folgenden näher erläutert.
- Fig. 1: zeigt eine schematische Ansicht einer Ausführungsform einer Bearbeitungsanlage zur kombinierten Feinbohr- und Honbearbeitung zylindrischer Innenflächen von Bohrungen in Werkstücken;
- Fig. 2: zeigt ein Weg-Zeit-Diagramm einer Ausführungsform eines Verfahrens nach der Erfindung; und
- Fig. 3: zeigt eine schematische Darstellung einer Honeinheit mit Biegestange, unterem Gelenk und doppelt aufweitendem Honwerkzeug.

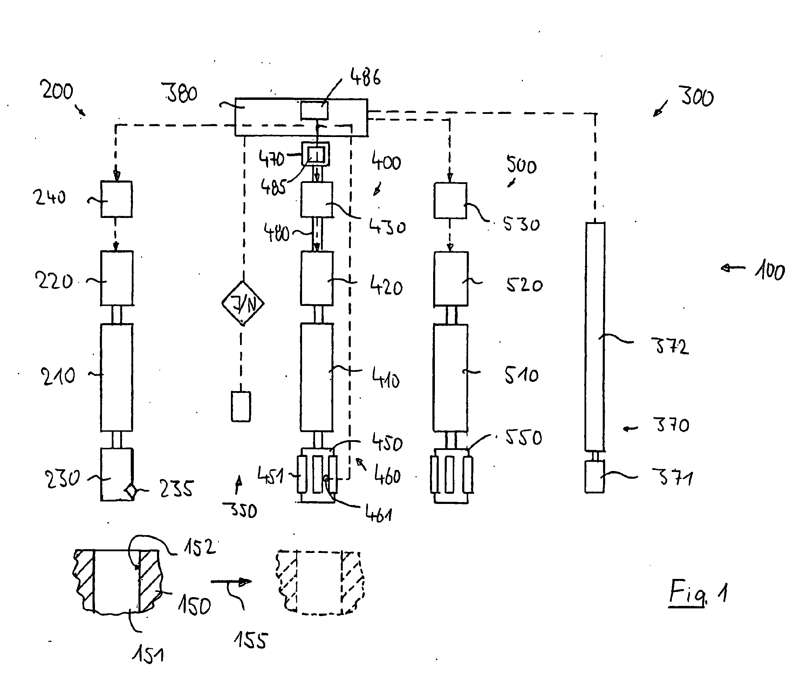

In Fig. 1 ist eine schematische Darstellung einer Ausführungsform einer Bearbeitungsanlage 100 zum Feinbearbeiten zylindrischer Innenflächen von Bohrungen in Werkstücken durch Feinbohren und nachfolgendes Honen gezeigt. Die Bearbeitungsanlage umfasst eine Feinbohreinrichtung 200 sowie eine Honeinrichtung 300, die im Beispielsfall auf einem gemeinsamen Maschinenbett (nicht gezeigt) aufgebaut sind, bei anderen Ausführungsformen jedoch auch getrennt voneinander aufgestellte Maschinenbetten haben können.

Die Feinbohreinrichtung 200 umfasst eine Feinbohrspindel 210, deren starr geführte Spindelachse im Wesentlichen vertikal ausgerichtet ist und die mit Hilfe eines Spindelantriebs 220 vertikal bewegt und um die Spindelachse gedreht werden kann. An das freie untere Ende der Feinbohrspindel ist ein Feinbohrwerkzeug 230 starr angekoppelt, an dessen Umfang eine aus Hartmetall bestehende Schneidplatte angebracht ist, die als Bohrerspitze 235 dient. Mit Hilfe einer nicht gezeigten Verstelleinrichtung kann die radiale Position der Bohrerspitze verstellt und damit der Durchmesser der feinzubohrenden Bohrung festgelegt werden. Die Axialbewegung und die Rotationsbewegung der Feinbohrspindel sowie die Zustellung der Bohrerspitze werden über eine Feinbohr-Steuereinheit 240 gesteuert. Bei typischen Feinbohroperationen wird mit Drehzahlen zwischen ca. 1000 und ca. 3000 U/min und Vorschubgeschwindigkeiten zwischen ca. 200 und ca. 1000 m/min gearbeitet. Typische Schnitttiefen (Materialabtrag) bezogen auf den Durchmesser liegen normalerweise zwischen 0,1 mm und 1 mm. Abweichungen von diesen typischen Parameterbereichen sind in Ausnahmefällen möglich.

Die zweispindlige Honeinrichtung 300 umfasst zwei Honeinheiten 400 und 500. Jede der Honeinheiten hat eine vertikale Honspindel 410 bzw. 510, die über einen Spindelantrieb 420 bzw. 520 so angetrieben wird, dass die Honspindel bei der Honbearbeitung vertikal oszillierende Arbeitsbewegungen ausführt, denen eine Rotationsbewegung um die vertikale Drehachse überlagert ist. Eine erste Honsteuereinheit 430 bzw. eine zweite Honsteuereinheit 530 steuern die Arbeitsbewegungen der Honspindeln.

Der Spindelantrieb 420 der ersten Honeinheit ist für relativ hohe Drehzahlen bis zu 800 U/min oder mehr, z.B bis 1500 U/min, ausgelegt

Am unteren freien Ende der ersten Honspindel 410 ist ein erstes Honwerkzeug 450 begrenzt beweglich angekoppelt. Mit Hilfe des ersten Honwerkzeuges wird unmittelbar im Anschluss an die mit Hilfe des Feinbohrens durchgeführten Vorbearbeitung der Bohrung in einer einzigen Leistungsfeinhonbearbeitungsstufe eine Leistungsfeinhonbearbeitung der vorbearbeiteten (feingebohrten) Bohrung durchgeführt. Die "Leistungsfeinhonbearbeitung" wird in dieser Anmeldung auch vereinfacht als "Leistungsfeinhonen" oder "High Performance Smooth Honing" oder kurz als "HPS-Prozess" bezeichnet.

Das erste Honwerkzeug ist ein einfach aufweitbares Honwerkzeug, an dessen Umfang eine Vielzahl von Schneidkörpern in Form von Honleisten 451 angebracht sind. Als Honleisten sind Diamant-Honleisten vom Typ D54 vorgesehen, d.h. Honleisten mit Diamantschneidkörnern, deren mittlere Korngröße im Bereich von ca. 35µm bis ca. 76µm liegt. Die vorzugsweise 1 mm bis 3 mm breiten Honleisten können mit Hilfe eines im Inneren des Honwerkzeuges 450 angeordneten Mechanismus gemeinsam radial nach außen verschoben (zugestellt) bzw. zurückgezogen werden. Zur Betätigung dieses Mechanismus dient eine Zustelleinrichtung 470, die über eine Druckstange 480 mit einem im Inneren des Honwerkzeuges angeordneten Keilelement verbunden ist. Eine Verschiebung der Druckstange, die sich durch die gesamte Honspindel 410 erstreckt, führt zu einer Vergrößerung des wirksamen Durchmessers des Honwerkzeuges durch radiale Verschiebung der Honleisten nach außen. Dieser Vorgang wird auch als Zustellung bezeichnet. Die Zurückstellung, also die Verschiebung der Honleisten nach radial innen, wird bei dem Beispielssystem durch Federn vorgenommen, die die Honleisten radial nach innen beaufschlagen und diese nach innen bewegen, sobald ein Zurückziehen der Druckstange diese nach innen gerichtete Radialbewegung ermöglicht.

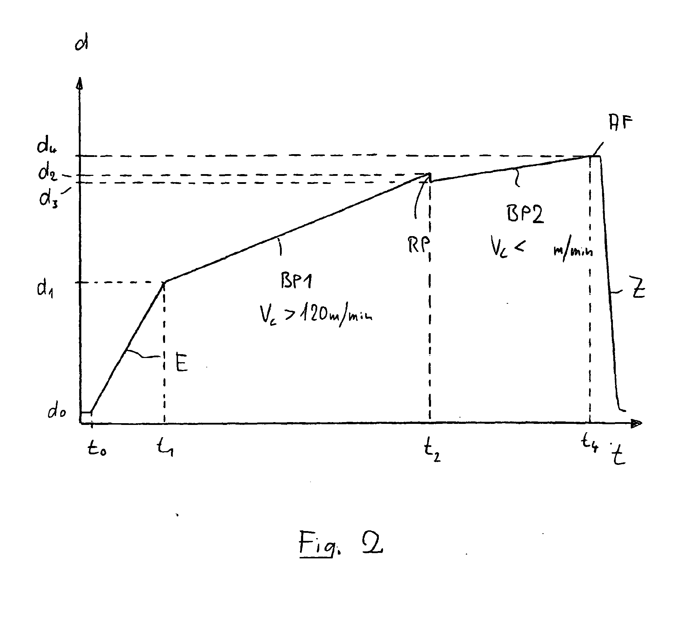

Die Zustellbewegung der Druckstange bzw. ihre Rückzugsbewegung wird durch einen Schrittmotor 485 bewirkt. Der Schrittmotor wird von einer Steuereinrichtung 486 angesteuert, die Impulszüge einer bestimmten Frequenz an den Schrittmotor liefert. Je höher die Frequenz ist, desto schneller dreht sich der Schrittmotor und desto schneller ist die Vorschubgeschwindigkeit der Druckstange und damit die Zustellgeschwindigkeit der Honleisten. Die Steuereinrichtung für den Schrittmotor kann Teil der zentralen Steuereinrichtung 380 der Bearbeitungsanlage sein, die von einem Bediener durch Eingabebefehle programmierbar ist. Die Steuereinrichtung 486 dient dazu, das Honwerkzeug in einer bestimmten Weise zuzustellen, wie dies weiter unten mit Bezug auf Fig. 2 noch beschrieben wird.

Das zweite Honwerkzeug 550 ist für eine Plateauhonoperation ausgelegt, mit der die angestrebte Oberflächenstruktur der fertig bearbeiteten Bohrung im Wesentlichen ohne Materialabtrag erzielt wird. Bei anderen Ausführungsformen ist anstelle des Plateauhonwerkzeuges ein Bürsthonwerkzeug vorgesehen. Die zweite Honeinheit und die erste Honeinheit können ansonsten im Wesentlichen gleich aufgebaut sein.

Die Honeinrichtung 300 hat mehrere Kontroll- und Messsysteme zur Kontrolle bzw. zur Vermessung des bearbeiteten Werkstückes vor, während und nach der Honbearbeitung. Zwischen der Feinbohreinrichtung 200 und der ersten Honeinheit 400 ist eine Bohrungskontrolleinrichtung 350 angeordnet, die dafür ausgelegt ist festzustellen, ob das von der Feinbohreinrichtung kommende Werkstück von der Feinbohreinrichtung tatsächlich in die erwartete Makroform gebracht wurde, die eine anschließende Honbearbeitung durch die Honeinheiten 400 und 500 erlaubt. Mit Hilfe der Bohrungskontrolleinrichtung 350 kann insbesondere eine "Gebohrt-Kontrolle" durchgeführt werden, um beispielsweise festzustellen, ob die Bohrspitze 235 der Feinbohreinrichtung noch weitgehend intakt oder über die Toleranzgrenzen hinaus verschlissen bzw. gebrochen ist.

Die Bohrungskontrolleinrichtung kann auch als Durchmesser-Meßsystem ausgelegt sein. In diesem Fall kann das messende System auch zur Messung des Durchmessers nach dem Feinbohren und die entsprechenden Messwerte zur Verschleißkompensation am Feinbohrwerkzeug eingesetzt werden.

Weiterhin hat die Honeinrichtung eine in die erste Honeinheit 400 integrierte Messeinrichtung 460, die der Überwachung des Bearbeitungsfortschritts im Verlauf der ersten Honoperation dient. Die Messeinrichtung 460 ist als pneumatisch arbeitende "Luftmesseinrichtung" ausgelegt. Sie umfasst ein Paar von Messdüsen 461, die am Honwerkzeug 450 diametral gegenüberliegend zwischen den Honleisten 451 angeordnet sind. Den Messdüsen wird, beispielsweise über einen Ringverteiler, ein Luftstrom zugeleitet. Der in dem System herrschende Luftdruck wird innerhalb der Messeinrichtung analysiert und ermöglicht es, den Abstand zwischen den Luftmessdüsen und der Bohrungswand zu messen. Der Messbereich typischer geeigneter Luftmesssysteme reicht in der Regel bis ca. 150 µm (in Sonderfällen bis ca. 300 µm), wobei mit dem dynamischen System Messgenauigkeiten in der Größenordnung zwischen ca. 2 µm und 5 µm erzielbar sind.

Die zweite Honeinheit 500 kann ebenfalls eine entsprechend aufgebaute oder nach einem anderen Messprinzip funktionierende Messeinrichtung mit in das Honwerkzeug 550 integrierten Messsensoren haben, es ist jedoch auch eine Ausgestaltung ohne integrierte Messeinrichtung möglich.

In Materialflussrichtung hinter den Honeinheiten ist eine Nachmesseinrichtung 370 angebracht, zu der ein Nachmesskopf 371 gehört, der mit Hilfe einer Messspindel 372 in die fertig gehonte Bohrung eingefahren, gegebenenfalls innerhalb dieser Bohrung bewegt und wieder aus der Bohrung herausgezogen werden kann. Die Nachmesseinrichtung 370 ist signalleitend mit der übergeordneten Steuerung 380 der Honeinrichtung verbunden, so dass die im Nachmesssignal der Nachmesseinrichtung enthaltene Information über Durchmesser, Makroform und Oberflächenbeschaffenheit der Bohrung über die Honsteuerung 380 verarbeitet und zur Steuerung der Honbearbeitung mit Hilfe der Honeinheiten genutzt werden kann.

Die Bearbeitungsanlage 100 kann wie nachfolgend beschrieben arbeiten. Der Betrieb der Bearbeitungsanlage wird beispielhaft anhand der Bearbeitung eines Motorblocks 150 für eine Brennkraftmaschine beschrieben, der mehrere Zylinderbohrungen 151 enthält, deren Innenflächen 152 durch Feinbohren und nachfolgendes Honen bearbeitet werden sollen, um nach Abschluss der Honbearbeitung als Gleitpartner für Kolbenringe des Motors zu dienen. Das Werkstück 150 ist auf einer nicht gezeigten Aufspannplatte aufgespannt und wird mit Hilfe geeigneter Fördereinrichtungen in Materialflussrichtung 155 zu den einzelnen Bearbeitungsstationen der Bearbeitungsanlage und von diesen wegbewegt.

Zunächst wird das Werkstück 150 für die Feinbohr-Bearbeitung in eine Bearbeitungsposition gebracht, die es erlaubt, das Feinbohrwerkzeug 230 durch vertikale Abwärtsbewegung der Feinbohrspindel in die Bohrung 151 einzuführen. Dann wird die Bohrung 151 mit Hilfe des Feinbohrwerkzeugs 200 feingebohrt, um eine feingebohrte Bohrung zu erzeugen, die gegenüber der angestrebten Sollform nach Ende der Honbearbeitung ein geringes Untermaß von beispielsweise 80 µm bis 90 µm im Durchmesser hat. Manchmal sind auch geringe Untermaße möglich, z.B. 70gm oder mehr. Zur Erzielung des gewünschten Durchmesser wird die radiale Position der Bohrerspitze mit Hilfe der Feinbohrsteuerung 240 bis auf den gewünschten Endwert zugestellt. Nach Ende der Feinbohroperation wird die Bohrerspitze zurückgezogen und das Feinbohrwerkzeug nach oben aus der feingebohrten Bohrung abgezogen.

Das Werkstück 150 wird danach in den Bereich der BohrungsKontrolleinrichtung 350 verfahren. Diese überprüft mittels eines Kontrollsensors, ob der Durchmesser der feingebohrten Bohrung oberhalb eines vorgegebenen Grenzwertes liegt, so dass eine Einführung der Honwerkzeuge in den nachfolgenden Honstufen gefahrlos möglich ist. Sollte es beim Feinbohrvorgang zum Bruch der Bohrspitze gekommen sein oder das Feinbohrwerkzeug durch Verschleiß nicht mehr in der Lage sein, einen ausreichenden Innendurchmesser zu erzeugen, so wird das nicht ausreichend aufgebohrte Werkstück aus dem Materialfluss abgezogen.

Werkstücke mit ausreichendem Innenmaß der durch Feinbohren vorbearbeiteten Bohrung werden derart in die gestrichelt gezeichnete Bearbeitungsposition unterhalb der ersten Honeinheit 400 verfahren, dass das Honwerkzeug 450 durch Absenken der Honspindel in die feingebohrte Bohrung eingefahren werden kann.

Danach wird das erste Honwerkzeug 450 durch Absenken der ersten Honspindel 410 in die feingebohrte Bohrung eingeführt. Mit Hilfe der Messeinrichtung 460 wird dann eine quantitative dimensionelle Vermessung der feingebohrten Bohrung durchgeführt. Nach dieser Eingangskontrolle für die Honoperationen beginnt die mit Hilfe der ersten Honeinheit 400 durchgeführte Leistungsfeinhonbearbeitungsstufe, mit der die Innenfläche 152 der Bohrung 151 eine gegenüber dem Feinbohren geänderte Oberflächenstruktur (mit überkreuzten Bearbeitungsspuren) sowie eine näher bei der Sollform liegende Makroform mit größerem Innendurchmesser erhält. Bei dieser Leitungsfeinhonbearbeitung mit Hilfe ein und desselben Honwerkzeuges 450 wird einerseits der größte Teil des nach der Vorbearbeitung noch resultierenden Untermaßes beseitigt, so dass die Bohrung im Wesentlichen ihr Soll-Maß des Durchmessers erhält, andererseits wird jedoch durch die Verwendung von Schneidkörpern mit relativ feiner Körnung am Ende der Leistungsfeinhonbearbeitungsstufe eine Oberflächenstruktur erreicht, die in einer nachgeschalteten Endbearbeitung im Wesentlichen ohne Veränderung des Bohrungsmaßes in die gewünschte Soll-Oberflächenstruktur der fertig bearbeiteten Bohrung überführt werden kann.

Die Feinbearbeitungsanlage hat eine Steuereinrichtung 380, die u.a. die Zustellbewegungen der Schneidkörper, den damit verbundenen Abtrag sowie die Drehzahl bzw. den zeitlichen Verlauf der Drehzahl der Honspindel und damit die Schnittgeschwindigkeiten der Schneidkörper relativ zur Bohrungsinnenfläche programmierbar steuert. Eine Besonderheit der Steuerungseinrichtung besteht darin, dass sie derart konfiguriert oder konfigurierbar ist, dass das Honwerkzeug zumindest innerhalb eines Bearbeitungszeitintervalles derart antreibbar ist, dass eine Schnittgeschwindigkeit der Schneidkörper relativ zur Innenfläche der Bohrung mehr als 90 m/min beträgt, wobei vorzugsweise die Schnittgeschwindigkeit während des Bearbeitungszeitintervalles mehr als 120 m/min beträgt. Die Steuereinrichtung ist bei der Ausführungsform derart konfiguriert, dass Schneidkörper des Honwerkzeuges während einer ersten Bearbeitungsphase mit einer ersten Schnittgeschwindigkeit von mehr als 90 m/min und während einer nachfolgenden zweiten Bearbeitungsphase mit einer gegenüber der ersten Schnittgeschwindigkeit geringeren zweiten Schnittgeschwindigkeit bewegbar sind.

Fig. 2 zeigt ein Weg-Zeit-Diagramm einer möglichen Zustellbewegung, die zwei Bearbeitungsphasen mit unterschiedlichen Abtragscharakterisiken umfasst. Die Abszisse des Diagramms stellt die Zeit t dar, während die Ordinate den Abstand der bei der materialabtragenden Bearbeitung wirksamen Außenflächen der Honleisten von einem Bezugspunkt, beispielsweise von der Drehachse des Honwerkzeuges angibt. Die Werte der Ordinate können beispielsweise dem Zustellweg der radialen Zustellbewegung entsprechen. Das Honwerkzeug 450 wird mit nach innen zurückgezogenen Honleisten (entsprechend einem relativ kleinen Anfangs-Außendurchmesser d₀) in die Bohrung des Werkstücks eingefahren. Dann wird zum Zeitpunkt t₀ durch Ansteuerung des Schrittmotors die Zustellung der Honleisten eingeleitet, und zwar mit relativ hoher Geschwindigkeit in einem Eilgang, der durch den Kurvenzug E dargestellt ist. Aus der großen Steigung ist die große Zustellgeschwindigkeit zu entnehmen, die beispielsweise im Bereich von 2 mm/min liegen kann. Bei Erreichen einer bestimmten Position d₁ des Werkzeuges, also einer bestimmten Aufweitstellung, schaltet die Steuerung zum Zeitpunkt t₁ den Zustellmechanismus auf einen Arbeitsvorschub mit niedrigerer Zustellgeschwindigkeit um. Zu diesem Zeitpunkt t₁ sind die Schneidkörper des Honwerkzeuges bereits in Kontakt der Werkstückinnenwand gekommen, so dass eine gewisse Vorspannung zwischen Honwerkzeug und Werkstück entsteht, die absichert, dass mit dem Beginn des nachfolgenden Bearbeitungsvorganges unmittelbar eine hohe Zerspanleistung erreicht wird.

Zum Zeitpunkt t₁ wird die erste Bearbeitungsphase eingeleitet, die durch den Kurvenzug BP1 repräsentiert ist. Der Punkt d₁, an dem das Umschalten erfolgt, kann beispielsweise durch Messen des Abstandes von der Ausgangsposition ermittelt werden. Es ist ebenfalls möglich, dass der Punkt d₁ dadurch ermittelt wird, dass die Vorrichtung auf geeignete Weise feststellt, dass eine Berührung zwischen den Honleisten des Honwerkzeuges und der Innenwand der Bohrung stattfindet. Diese Anlagekontrolle kann beispielsweise aufgrund einer Erhöhung des Stromverbrauchs des in dem Spindelantrieb 420 wirkenden Motors oder durch eine Kraftmessvorrichtung erfolgen.

Um gerade zu Beginn der Honbearbeitung in der ersten Bearbeitungsphase BP1 einen hohen Werkstoffabtrag zu erreichen, kann der Durchmesser d₁ so gewählt werden, dass es zu einer relativ starken Verspannung zwischen Werkstück und Werkzeug kommt. Die hohen Flächenpressungen zwischen den Schneidkörpern (Honleisten) und dem Werkstoff führen dann gerade am Anfang der ersten Bearbeitungsphase BP1 zu einem hohen Abtrag, möglicherweise aber auch zu einer schlechteren Zylinderform. Im Verlauf der ersten Bearbeitungsphase BP1 kann dann die Zustellung des Honwerkzeuges langsamer als der Werkstoffabtrag erfolgen. Damit reduziert sich während der ersten Bearbeitungsstufe BP1 die Flächenpressung kontinuierlich, so dass sich bei gleichzeitig reduzierter Oberflächenrauheit die Form verbessert. Bei anderen Ausführungsformen kann die erste Bearbeitungsphase BP1 nochmals unterteilt sein in einen zeitlich früher liegenden Teilabschnitt mit hoher Zustellgeschwindigkeit und einen danach folgenden Zeitabschnitt mit langsamerer Zustellgeschwindigkeit.

Um innerhalb der ersten Bearbeitungsphase BP1 mit Hilfe der relativ feinen Schneidkörner innerhalb kurzer Bearbeitungszeit einen wesentlichen Teil des nach der Vorbearbeitung resultierenden Untermaßes abzutragen, wird die erste Honspindel mit hoher Drehzahl derart angetrieben, dass die Schnittgeschwindigkeit v_{C} der Schneidkörper relativ zur Bohrungsinnenfläche zumindest nach einer Beschleunigungsphase im Bereich von mindestens 90m/min liegt, im Beispiel sogar bei mehr als 120m/min. Die in Umfangsrichtung relativ schmalen Honleisten, die eine Umfangsbreite von weniger als 3mm, beispielsweise ca. 2mm, haben, werden weggesteuert mit Hilfe der elektromechanischen Schrittzustellung so zugestellt, dass sich innerhalb eines ersten Bearbeitungszeitintervalls von ca. 10 bis 20 Sekunden bezogen auf den Durchmesser der Bohrung ein Abtrag von mehr als 60% des vor Beginn der ersten Bearbeitungsphase vorliegenden Untermaßes ergibt, also beispielsweise ein Abtrag von 50 bis 90µm.

Nach Abschluss der ersten Bearbeitungsphase BP1 zum Zeitpunkt t₂ ist bei der Zustellung der Punkt d₂ erreicht. Dieser Punkt wird bei der Einrichtung der Bearbeitungsvorrichtung so festgelegt, dass er kurz vor dem dem Soll-Maß der Bohrung entsprechenden Zustellweg liegt. An diesem Punkt schaltet nun die Steuereinrichtung den Schrittmotor ab, so dass während einer relativ kurzen Zeit kein Vorschub mehr erfolgt. Anschließend wird der Schrittmotor in umgekehrter Drehrichtung betrieben, so dass das Honwerkzeug in einer kurzen Rückstellphase (Kurvenzug RP) zurückgestellt wird bis zu einem Rückkehrpunkt d₃, der ebenfalls vorher über Programmierung festgelegt worden ist. An diesem Punkt ist nun der gesamte Antriebsstrang der Zustelleinrichtung bis hin zum Honwerkzeug spannungsfrei oder spannungsarm, so dass sich alle oder fast alle während des Arbeitsvorschubes auftretenden Spannungen lösen können. Die Rückstellbewegung kann so gesteuert werden, dass die abrasiven Außenflächen der Honleisten noch in Anlagekontakt mit der Bohrungsinnenfläche stehen, wobei jedoch gleichzeitig ein Großteil der elastischen Verspannungen aus dem System genommen werden sollte.

Sobald der Rückkehrpunkt d₃ erreicht ist, schaltet die Steuerung wieder um und stellt nun die Honleisten des Honwerkzeugs in einem zweiten Arbeitsvorschub erneut zu, um eine zweite Bearbeitungsphase BP2 einzuleiten. Zur Erzeugung der gewünschten Oberflächenstruktur wird die Drehzahl der Honspindel in der zweiten Bearbeitungsphase BP2 gegenüber der ersten Bearbeitungsphase BP1 deutlich reduziert, so dass Schnittgeschwindigkeiten V_{C} kleiner 90 m/min resultieren. Da zu Beginn der zweiten Bearbeitungsphase BP2 die Honleisten des Honwerkzeuges bereits vollständig in Eingriff mit der Innenwand der Bohrung liegen, ist das für die Erzielung der gewünschten Oberflächenstruktur nötige Aufmaß sehr gering. In der zweiten Bearbeitungsphase wird im Wesentlichen nur der gewünschte Honwinkel zwischen den Bearbeitungsriefen durch geeignete Einstellung des Verhältnisses zwischen Drehgeschwindigkeit und axialer Oszillationsgeschwindigkeit eingestellt sowie die gewünschte Oberflächenrauhigkeit erzeugt. Der durch die zweite Bearbeitungsphase BP2 bewirkte zweite Abtrag kann im Bereich von 20µm oder darunter liegen. Hierfür typische Bearbeitungszeitintervalle können z.B. im Bereich von 8 s bis 15 s liegen. Die Zustellung der in der zweiten Bearbeitungsphase erfolgt weggesteuert mit konstanter Geschwindigkeit, bis die dem Soll-Maß des zu bearbeitenden Werkstückes entsprechende Soll-Position d₄ erreicht ist.

Wie Fig. 2 zu entnehmen ist, ist die Vorschubgeschwindigkeit während der zweiten Bearbeitungsphase BP2 deutlich geringer als während der ersten Bearbeitungsphase. Bei Erreichen des Soll-Maßes zum Zeitpunkt t₄ wird der Vorschub angehalten und das Werkzeug bei zunächst unveränderter Position weiter betrieben, wodurch die sogenannte Ausfeuerphase AP gebildet wird. Anschließend erfolgt eine Zurückstellung der Honleisten längs des Kurvenzuges Z bis zur Ausgangsposition d₀.

In Tabelle 1 sind typische Werte für Aufmaß, Durchmesserstreuung (jeweils bezogen auf Bohrungsdurchmesser), Zylinderform, Rauheit und Honzeit eines für die Bearbeitung eines Grauguss-Motorblockes optimierten Verfahrens angegeben. Die Qualitätswerte beschreiben den Zustand der Bohrung nach der jeweiligen Bearbeitungsoperation.

**Tabelle 1**

| | Feinbohren | Leistungsfeinhonen BP1 | Leistungsfeinhonen BP2 | Plateauhonen |
|---|---|---|---|---|
| Aufmaß Honen | - | 60 µm | 20 µm | 5 µm |
| Durchmesserstreuung | 30 µm | 12 µm | 8 µm | - |
| Zylinderform | 30 µm | 12 µm | 7 µm | - |
| Rauheit | 20 µm | 10 µm | 6 µm | 4 µm |
| Honzeit | - | 15 sec | 10 sec | 8 sec |

Das Bearbeitungsergebnis der Leistungshonbearbeitungsstufe kann während der Leistungshonbearbeitung und/oder nach Abschluss der Leistungshonbearbeitung mit Hilfe der Messeinrichtung 460 überprüft werden. Insbesondere kann auf Basis des entsprechenden Messsignals die Leistungshonbearbeitungsstufe beendet werden, wenn der nach dem Leistungshonen angestrebte Durchmesser der Bohrung erreicht ist.

Anschließend wird das erste Honwerkzeug 460 aus der Bohrung ausgefahren und das Werkstück wird in eine der zweiten Honeinheit 500 zugeordnete Bearbeitungsposition bewegt, die eine Einführung des zweiten Honwerkzeuges 550 in die Bohrung erlaubt. Nach Absenken des zweiten Honwerkzeuges in die Bohrung wird die nur noch sehr wenig Material abtragende Plateauhonoperation durchgeführt, durch die die Bohrung bei im wesentlichen unveränderter Makroform ihre endgültige Oberflächenstruktur erhält. Auch die Plateauhonoperation kann mit Hilfe einer Messeinrichtung überwacht und gegebenenfalls in Abhängigkeit eines entsprechenden Messsignals gesteuert werden.

Bei anderen Ausführungsformen des Verfahrens kann die Endbearbeitungsstufe (hier: das Plateauhonen) entfallen, wenn nach dem Leistungsfeinhonen bereits die angestrebte Makroform und Oberflächenstruktur erreicht ist.

Nach Abschluss der Plateauhonoperation und Zurückziehen der zweiten Honspindel aus dem Werkstück wird das Werkstück in Richtung der Nachmesseinrichtung 370 verfahren, die dazu eingerichtet ist, die fertige feinbearbeitete Bohrung 151 zu vermessen und zu überprüfen, ob der Durchmesser, die Makroform der Bohrung 151 und/oder die Oberflächenstruktur der Innenfläche 152 den Spezifikationen des Bearbeitungsprozesses genügen. Durch eine Rückführung entsprechender Nachmess-Signale zur Steuerung 380 der Honmaschine ist eine Verbesserung der Konstanz des Bearbeitungsverfahrens erzielbar, so dass Streuungen in der Qualität bearbeiteter Bohrung im Vergleich zu herkömmlichen Bearbeitungsanlagen verringert werden können.

Während der Leistungsfeinhonbearbeitung mit Hilfe der relativ feinkörnigen Schneidkörper können sehr hohe, bei klassischen Honvorgängen unübliche Drehzahlen der Spindel auftreten. Obwohl manche konventionellen Honanlagen ohne konstruktive Modifikation zur Durchführung des Verfahrens verwendet werden können, kann eine weitere Optimierung durch eine Reihe von alternativ oder kumulativ anwendbaren Optimierungsmaßnahmen vorgenommen werden. Es hat sich beispielsweise als vorteilhaft herausgestellt, wenn zur Ankopplung des ersten Honwerkzeuges eine starre Antriebsstange verwendet wird, während das Werkstück für die Leistungsfeinhonbearbeitungsstufe schwimmend gelagert wird. Hierdurch können drehzahlbedingte Vibrationen der Honspindel minimiert werden, was sich vorteilhaft auf die Oberflächenqualität auswirkt. Eine besonders effektive Kühlschmierstoffzuführung kann durch Zuführung des Kühlschmierstoffes durch das Honwerkzeug hindurch gewährleistet werden. Dadurch können bei konventioneller Kühlschmierstoffzuführung von außen mögliche Abschattungseffekte vermieden oder vermindert werden. Besonders hohe Abtragsleistungen mit feinkörnigen Honleisten sind dann erzielbar, wenn relativ schmale Honleisten verwendet werden, beispielsweise mit einer Umfangsbreite von 3mm oder weniger. Solche schmalen Honleisten haben sich insbesondere in Verbindung mit einer mechanischen Aufweitung als sehr abtragsstark herausgestellt. Eine hydraulische Aufweitung ist jedoch ebenfalls möglich.

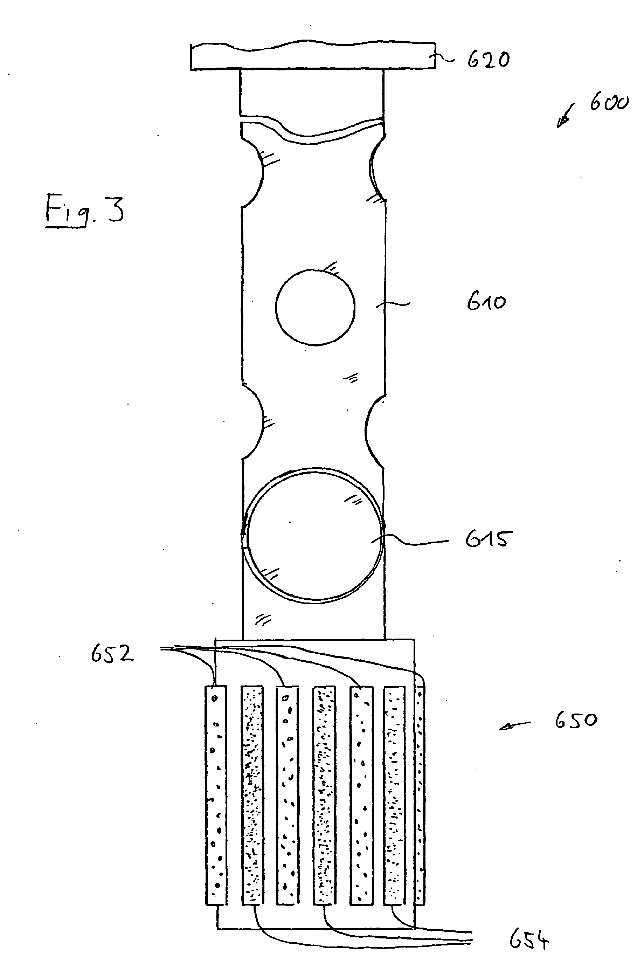

Anhand von Fig. 3 wird eine andere Ausführungsform eines Feinbearbeitungsprozesses und einer Feinbearbeitungsanlage zur Durchführung des Verfahrens erläutert. Die Feinbearbeitungsanlage ist als reine Honanlage konzipiert und hat nur eine einzige Honeinheit 600, die sowohl der Vorbearbeitung der Bohrung in einer Vorbearbeitungsstufe durch Schrupphonen, als auch der Leistungsfeinhonbearbeitung der vorbearbeiteten Bohrung dient. Die Honeinheit umfasst eine als Biegestange ausgelegte Antriebsstange 610, deren antriebszugewandtes Ende ohne Gelenk mit dem Spindelantrieb 620 gekoppelt ist. Am unteren Ende der Biegestange 610 ist ein mehrachsiges Gelenk 615 angebracht, das die Biegestange 610 mit dem Honwerkzeug 650 begrenzt beweglich koppelt.

Das Honwerkzeug 650 ist ein doppelaufweitendes Honwerkzeug und umfasst zwei unabhängig voneinander zustellbare Schneidgruppen von Honleisten unterschiedlicher Körnung, die abwechselnd in Umfangsrichtung des Honwerkzeuges angeordnet sind. Die erste Schneidgruppe umfasst relativ grobkörnige Honleisten 652, deren Schneidkörper mittlere Korngrößen im Bereich von 91 µm bis 251 µm haben können, um die Bohrung mittels Schrupphonen vorzubearbeiten. Die in Umfangsrichtung dazwischen angeordneten Honleisten 654 der zweiten Schneidgruppe sind für die Leistungsfeinhonbearbeitung vorgesehen und haben dementsprechend wesentlich geringere mittlere Korngrößen im Bereich zwischen ca. 35µm und ca. 91µm. Die Antriebseinheit der Honanlage ist in an sich bekannter Weise zur unabhängigen Zustellung und zur Rückziehung der unterschiedlichen Gruppen von Honleisten ausgelegt.

Für die Feinbearbeitung wird zunächst das Honwerkzeug in die zu bearbeitende Bohrung eingefahren und es werden die grobkörnigen Honleisten 652 der ersten Schneidgruppe zugestellt, während die Honleisten 654 der zweiten Schneidgruppe zurückgezogen sind. Mit den grobkörnigen Schneidleisten wird dann das Schrupphonen bei typischen Schnittgeschwindigkeiten von bis zu 200 m/min oder darüber durchgeführt, bis ein Durchmesser-Untermaß von beispielsweise 70µm bis 90µm bezogen auf das gewünschte Durchmessermaß der fertigen Bohrung erreicht ist. Bei dieser Bearbeitungsstufe wird auch gegebenenfalls die Lage der Bohrung korrigiert. Nach Abschluss der Vorbearbeitung werden die grobkörnigen Honleisten 652 der ersten Schneidgruppe zurückgezogen und stattdessen die feinkörnigen Honleisten 654 der für die Leistungsfeinhonbearbeitung vorgesehenen zweiten Schneidgruppe zugestellt. Die Leistungsfeinhonbearbeitung kann dann in der bereits beschriebenen Weise in einem mehrere Bearbeitungsphasen umfassenden Prozess durchgeführt werden (vgl. Fig. 2 und zugehörige Beschreibung).

## Patentansprüche

1. Verfahren zur Feinbearbeitung einer zylindrischen Innenfläche einer Bohrung in einem Werkstück zur Erzeugung einer fertig bearbeiteten Bohrung, die ein Soll-Maß und eine Soll-Oberflächenstruktur hat, mit folgenden Schritten:
Vorbearbeitung der Bohrung in einer Vorbearbeitungsstufe zur Erzeugung einer vorbearbeiteten Bohrung, die gegenüber der fertig bearbeiteten Bohrung bezogen auf einen Durchmesser der Bohrung ein Untermaß von mindestens 70 µm hat;
Leistungsfeinhonbearbeitung der vorbearbeiteten Bohrung unmittelbar nach der Vorbearbeitung in einer einzigen Leistungsfeinhonbearbeitungsstufe mit Hilfe eines aufweitbaren Honwerkzeuges zur Erzeugung einer leistungsfeingehonten Bohrung;
wobei durch die Leistungsfeinhonbearbeitung mindestens 90 % des nach der Vorbearbeitung resultierenden Untermaßes durch Honen abgetragen werden;
und wobei ein Honwerkzeug mit Schneidkörpern feiner Körnung verwendet wird, die so ausgelegt sind, dass eine nach der Leistungsfeinhonbearbeitung resultierende Oberflächenstruktur der leistungsfeingehonten Bohrung im wesentlichen oder vollständig der Soll-Oberflächenstruktur entspricht.

2. Verfahren nach Anspruch 1, worin für die Leistungsfeinhonbearbeitung ausschließlich Schneidkörper mit mittleren Korngrößen von 35µm bis 91µm verwendet werden.

3. Verfahren nach Anspruch 1 oder 2, worin die Leistungsfeinhonbearbeitung für eine Bohrung mit Durchmesser D innerhalb einer Honzeit H durchgeführt wird, für die die Bedingung H < 35 s · D/75 gilt.

4. Verfahren nach einem der vorhergehenden Ansprüche, worin die nach der Leistungsfeinhonbearbeitung resultierende Oberflächenstruktur im wesentlichen ohne Veränderung des Bohrungsmaßes in die Soll-Oberflächenstruktur überführt wird, wobei vorzugsweise die nach der Leistungsfeinhonbearbeitung resultierende Oberflächenstruktur durch eine Endbearbeitung mittels Plateauhonen und/oder durch Bürsthonen in die Soll-Oberflächenstruktur überführt wird.

5. Verfahren nach einem der vorhergehenden Ansprüche, worin eine der Leistungsfeinhonbearbeitung nachgeschaltete Endbearbeitung so durchgeführt wird, dass ein Materialabtrag weniger als 8 µm bezogen auf den Durchmesser der Bohrung beträgt.

6. Verfahren nach Anspruch 1, 2 oder 3 worin die Leistungsfeinhonbearbeitung so durchgeführt wird, dass die nachbearbeitete Bohrung das Soll-Maß und die Soll-Oberflächenstruktur hat.

7. Verfahren nach einem der vorhergehenden Ansprüche, worin während der Leistungsfeinhonbearbeitung das Honwerkzeug zumindest innerhalb eines Bearbeitungszeitintervalles derart angetrieben wird, dass eine Schnittgeschwindigkeit der Schneidkörper relativ zur Innenfläche der Bohrung mehr als 90 m/min beträgt, wobei vorzugsweise die Schnittgeschwindigkeit während des Bearbeitungszeitintervalles mehr als 120 m/min beträgt.

8. Verfahren nach einem der vorhergehenden Ansprüche, worin während der Leistungsfeinhonbearbeitung Schneidkörper des Honwerkzeuges während einer ersten Bearbeitungsphase mit einer ersten Schnittgeschwindigkeit von mehr als 90 m/min und während einer nachfolgenden zweiten Bearbeitungsphase mit einer gegenüber der ersten Schnittgeschwindigkeit geringeren zweiten Schnittgeschwindigkeit beweget werden, wobei vorzugsweise die erste Schnittgeschwindigkeit mehr als 120 m/min und die zweite Schnittgeschwindigkeit weniger als 90 m/min beträgt.

9. Verfahren nach einem der vorhergehenden Ansprüche, worin Schneidkörper des Honwerkzeuges während der Leistungsfeinhonbearbeitung in einer ersten Bearbeitungsphase zur Erzeugung eines ersten Abtrages mit einer ersten Zustellrate zugestellt werden und in einer der ersten Bearbeitungsphase folgenden zweiten Bearbeitungsphase zur Erzeugung eines zweiten Abtrages mit einer zweiten Zustellrate zugestellt werden, die geringer als die erste Zustellrate ist, wobei vorzugsweise in der ersten Bearbeitungsphase ein erster Abtrag von mindestens 50µm abgetragen wird und/oder worin während der zweiten Bearbeitungsphase ein zweiter Abtrag von maximal 20µm abgetragen wird.

10. Verfahren nach Anspruch 9, worin Schneidkörper des Honwerkzeuges während der ersten Bearbeitungsphase mindestens zeitweise mit einer Schnittgeschwindigkeit von mehr als 90 m/min bewegt werden und/oder worin die Schneidkörper während der zweiten Bearbeitungsphase mit einer Schnittgeschwindigkeit von weniger als 90m/min bewegt werden.

11. Verfahren nach einem der Ansprüche 8 bis 10, bei dem die erste Bearbeitungsphase maximal 20 s und die zweite Bearbeitungsphase maximal 15 s dauert.

12. Verfahren nach einem der Ansprüche 8 bis 11, worin die Schneidkörper nach Abschluss der ersten Bearbeitungsphase in einer Rückstellphase zurückgestellt werden und nach der Rückstellphase zur Einleitung der zweiten Bearbeitungsphase zugestellt werden, wobei eine Rückstellbewegung der in der Rückstellphase vorzugsweise derart gesteuert wird, dass die abrasiven Außenflächen der Schneidkörper am Ende der Rückstellphase noch in Anlagekontakt mit der Innenfläche der Bohrung stehen.

13. Verfahren nach einem der vorhergehenden Ansprüche, worin Schneidkörper des Honwerkzeugs während der Leistungsfeinhonbearbeitung weggesteuert zugestellt werden.

14. Verfahren nach einem der vorhergehenden Ansprüche, worin für die gesamte Leistungsfeinhonbearbeitung ein Honwerkzeug mit einfacher Aufweitung verwendet wird.

15. Verfahren nach einem der Ansprüche 1 bis 13, worin die Vorbearbeitung der Bohrung sowie die Leistungsfeinhonbearbeitung der vorbearbeiteten Bohrung mit Hilfe eines doppelt aufweitenden Honwerkzeuges durchgeführt wird, welches zwei unabhängig voneinander zustellbare Schneidgruppen hat, wobei eine erste Schneidgruppe mit relativ grobkörnigen Schneidkörnern für die Vorbearbeitung der Bohrung und eine zweite Schneidgruppe mit im Vergleich dazu relativ feinkörnigen Schneidkörpern zur Leistungshonbearbeitung der vorbearbeiteten Bohrung ausgelegt ist.

16. Verfahren nach einem der vorhergehenden Ansprüche, worin zur Ankopplung des für die Leistungsfeinhonbearbeitung verwendeten Honwerkzeuges eine starre Antriebsstange verwendet wird und das Werkstück für die Leistungsfeinhonbearbeitung schwimmend gelagert wird.

17. Verfahren nach einem der Ansprüche 1 bis 15, worin zur Ankopplung des für die Leistungsfeinhonbearbeitung verwendeten Honwerkzeuges eine Biegestange verwendet wird und ein einziges Gelenk zwischen der Biegestange und dem Honwerkzeug angeordnet ist.

18. Verfahren nach einem der vorhergehenden Ansprüche, worin während der Leistungsfeinhobearbeitung eine Zuführung von Kühlschmierstoff durch das Honwerkzeug hindurch erfolgt.

19. Verfahren nach einem der vorhergehenden Ansprüche, worin zur Leistungsfeinhonbearbeitung ein Honwerkzeug mit relativ schmalen Honleisten verwendet wird, die eine Umfangsbreite von 3mm oder weniger haben.

20. Feinbearbeitungsanlage (100) zur Feinbearbeitung mindestens einer zylindrischen Innenfläche (152) einer Bohrung in einem Werkstück, insbesondere zur Feinbearbeitung von Zylinderlaufflächen eines Motorblockes (150), mit mindestens einer Honeinheit (600) mit einer durch einen Spindelantrieb (620) antreibbaren Honspindel und einem Verbindungselement zur Übertragung einer Drehbewegung von der Honspindel auf ein Honwerkzeug, **dadurch gekennzeichnet, dass** das Verbindungselement eine Biegestange (610) ist und dass zwischen der Biegestange und dem Honwerkzeug (650) ein Gelenk (615) angeordnet ist.

21. Feinbearbeitungsanlage nach Anspruch 20, worin die Biegestange (610) einen Rohrabschnitt umfasst, der eine Vielzahl von regelmäßig oder unregelmäßig angeordneten und sich über einen Teil der Länge des Rohrabschnitts und einen Teil des Rohrumfangs erstreckenden Öffnungen aufweist, oder worin die Biegestange ein dünnwandiges Rohr oder ein Rohr aus einem Material mit einer gegenüber Stahlwerkstoff geringen Biegesteifigkeit aufweist.

22. Feiribearbeitungsanlage nach Anspruch 20 oder 21, **gekennzeichnet durch** eine Steuereinrichtung (380), die derart konfiguriert oder konfigurierbar ist, dass das Honwerkzeug zumindest innerhalb eines Bearbeitungszeitintervalles derart antreibbar ist, dass eine Schnittgeschwindigkeit der Schneidkörper relativ zur Innenfläche der Bohrung mehr als 90 m/min beträgt, wobei vorzugsweise die Schnittgeschwindigkeit während des Bearbeitungszeitintervalles mehr als 120 m/min beträgt, wobei insbesondere die Steuereinrichtung derart konfiguriert oder konfigurierbar ist, dass Schneidkörper des Honwerkzeuges während einer ersten Bearbeitungsphase mit einer ersten Schnittgeschwindigkeit von mehr als 90 m/min und während einer nachfolgenden zweiten Bearbeitungsphase mit einer gegenüber der ersten Schnittgeschwindigkeit geringeren zweiten Schnittgeschwindigkeit bewegbar sind.

23. Feinbearbeitungsanlage nach einem der Ansprüche 20 bis 22, **dadurch gekennzeichnet, dass** das Honwerkzeug Schneidkörper mit mittleren Korngrößen von 35µm bis 91µm hat, wobei das Honwerkzeug vorzugsweise ein einfach aufweitbares Honwerkzeug ist, das ausschliesslich Schneidkörper mit mittleren Korngrößen von 35µm bis 91µm hat.

24. Feinbearbeitungsanlage nach einem der Ansprüche 20 bis 23, **dadurch gekennzeichnet, dass** sie eine Honeinheit (600) hat, die sowohl für eine Vorbearbeitung der Bohrung in einer Vorbearbeitungsstufe durch Schrupphonen, als auch für eine Leistungsfeinhonbearbeitung der vorbearbeiteten Bohrung ausgelegt ist, wobei das Honwerkzeug (650) ein doppelt aufweitendes Honwerkzeug ist und zwei unabhängig voneinander zustellbare Schneidgruppen von Honleisten unterschiedlicher Körnung umfasst, wobei eine erste Schneidgruppe Honleisten (652) mit mittleren Korngrößen im Bereich von 91 µm bis 251 µm und eine zweite Schneidgruppe Honleisten (654) mit mittleren Korngrößen im Bereich zwischen 35µm und 91µm hat.

## Claims

1. Method for fine machining a cylindrical inner face of a bore in a workpiece for generating a finished bore having a desired size and a desired surface structure, including the following steps:
premachining the bore in a premachining stage to generate a premachined bore having an undersize of at least 70 µm in relation to the finished bore based on a diameter of the bore;
power fine hone machining the premachined bore immediately after the premachining in a single power fine hone machining stage with the aid of a widenable honing tool for generating a power fine honed bore;
wherein, as a result of the power fine hone machining, at least 90% of the undersize resulting after the premachining is removed by honing;
and wherein use is made of a honing tool with finely grained cutting bodies which are designed in such a way that a surface structure of the power fine honed bore,
the surface structure resulting after the power fine hone machining, corresponds substantially or completely to the desired surface structure.

2. Method according to Claim 1, wherein exclusively cutting bodies having average grain sizes of from 35 µm to 91 µm are used for the power fine hone machining.

3. Method according to Claim 1 or 2, wherein the power fine hone machining is carried out for a bore having a diameter D within a honing time H for which the condition H < 35 s · D/75 applies.

4. Method according to one of the preceding claims, wherein the surface structure resulting after the power fine hone machining is transformed into the desired surface structure substantially without altering the size of the bore, the surface structure resulting after the power fine hone machining preferably being transformed into the desired surface structure by an end machining by means of plateau honing and/or by brush honing.

5. Method according to one of the preceding claims, wherein an end machining following the power fine hone machining is carried out in such a way that an amount of material to be removed is less than 8 µm based on the diameter of the bore.

6. Method according to Claim 1, 2 or 3, wherein the power fine hone machining is carried out in such a way that the remachined bore has the target size and the target surface structure.

7. Method according to one of the preceding claims, wherein, during the power fine hone machining, the honing tool is driven at least within a machining period in such a way that a cutting speed of the cutting bodies relative to the inner face of the bore is more than 90 m/min, the cutting speed during the machining period preferably being more than 120 m/min.

8. Method according to one of the preceding claims, wherein, during the power fine hone machining, cutting bodies of the honing tool are moved during a first machining phase at a first cutting speed of more than 90 m/min and during a subsequent second machining phase at a second cutting speed which is lower than the first cutting speed, preferably the first cutting speed being more than 120 m/min and the second cutting speed being less than 90 m/min.

9. Method according to one of the preceding claims, wherein cutting bodies of the honing tool are fed at a first feed rate during the power fine hone machining in a first machining phase to generate a first amount of material to be removed and are fed at a second feed rate, which is less than the first feed rate, in a second machining phase following the first machining phase to generate a second amount of material to be removed, a first amount of material to be removed of at least 50 µm preferably being removed in the first operating phase and/or wherein a second amount of material to be removed of at most 20 µm is removed during the second machining phase.

10. Method according to Claim 9, wherein cutting bodies of the honing tool are moved during the first machining phase at least intermittently at a cutting speed of more than 90 m/min and/or wherein the cutting bodies are moved during the second machining phase at a cutting speed of less than 90 m/min.

11. Method according to one of Claims 8 to 10, wherein the first machining phase lasts at most 20 s and the second machining phase lasts at most 15 s.

12. Method according to one of Claims 8 to 11, wherein the cutting bodies are reset after the conclusion of the first machining phase in a resetting phase and are fed after the resetting phase for introducing the second machining phase, a resetting movement in the resetting phase being controlled preferably in such a way that the abrasive outer faces of the cutting bodies are still in bearing contact with the inner face of the bore at the end of the resetting phase.

13. Method according to one of the preceding claims, wherein cutting bodies of the honing tool are fed in a path-controlled manner during the power fine hone machining.

14. Method according to one of the preceding claims, wherein a honing tool with single widening is used for the entire power fine hone machining.

15. Method according to one of Claims 1 to 13, wherein the premachining of the bore and also the power fine hone machining of the premachined bore are carried out with the aid of a double widening honing tool having two cutting groups which can be fed independently of each other, a first cutting group being designed with relatively coarse-grained cutting grains for premachining the bore and a second cutting group being designed with cutting bodies which are relatively fine-grained by comparison thereto for power hone machining the premachined bore.

16. Method according to one of the preceding claims, wherein a rigid drive rod is used for linking the honing tool used for the power fine hone machining and the workpiece for the power fine hone machining is mounted in a floating manner.

17. Method according to one of Claims 1 to 15, wherein a bending rod is used for linking the honing tool used for the power fine hone machining and a single joint is arranged between the bending rod and the honing tool.

18. Method according to one of the preceding claims, wherein cooling lubricant is supplied through the honing tool during the power fine hone machining.

19. Method according to one of the preceding claims, wherein a honing tool with relatively narrow honing strips having a circumferential width of 3 mm or less is used for the power fine hone machining.

20. Fine machining installation (100) for fine machining at least one cylindrical inner face (152) of a bore in a workpiece, in particular for fine machining cylinder running faces of a motor unit (150), with at least one honing unit (600) with a honing spindle which can be driven by a spindle drive (620) and a connecting element for transmitting a rotational movement from the honing spindle to a honing tool, **characterized in that** the connecting element is a bending rod (610) and **in that** a joint (615) is arranged between the bending rod and the honing tool (650).

21. Fine machining installation according to Claim 20, wherein the bending rod (610) comprises a pipe portion having a large number of uniformly or non-uniformly arranged openings extending over a part of the length of the pipe portion and a part of the pipe circumference, or wherein the bending rod has a thin-walled pipe or a pipe made of a material having a flexural strength which is low compared to steel material.

22. Fine machining installation according to Claim 20 or 21, **characterized by** a control means (380) which is configured or configurable in such a way that the honing tool can be driven at least within a machining period in such a way that a cutting speed of the cutting bodies relative to the inner face of the bore is more than 90 m/min, preferably the cutting speed during the machining period being more than 120 m/min, in particular the control means being configured or configurable in such a way that cutting bodies of the honing tool can be moved during a first machining phase at a first cutting speed of more than 90 m/min and during a subsequent second machining phase at a second cutting speed which is lower than the first cutting speed.

23. Fine machining installation according to one of Claims 20 to 22, **characterized in that** the machining tool has cutting bodies having average grain sizes of from 35 µm to 91 µm, the honing tool being preferably a singly widenable honing tool having exclusively cutting bodies having average grain sizes of from 35 µm to 91 µm.

24. Fine machining installation according to one of Claims 20 to 23, **characterized in that** it has a honing unit (600) which is designed both for a premachining of the bore in a premachining stage by rough honing and for a power fine hone machining of the premachined bore, the honing tool (650) being a double widening honing tool and comprising two cutting groups of honing strips of differing grain size, wherein the cutting groups can be fed independently of each other, a first cutting group having honing strips (652) having average grain sizes in the range of from 91 µm to 251 µm and a second cutting group having honing strips (654) having average grain sizes in the range of between 35 µm and 91 µm.

## Revendications

1. Procédé de finissage d'une surface interne cylindrique d'un alésage dans une pièce pour la production d'un alésage usiné avec précision, qui présente une cote de consigne et une structure superficielle de consigne, comportant les étapes suivantes:
- préusinage de l'alésage dans une étape de préusinage pour produire un alésage préusiné, dont le diamètre d'alésage est sous-dimensionné d'au moins 70 µm par rapport à l'alésage usiné avec précision;
- usinage effectif par honage de précision de l'alésage préusiné immédiatement après le préusinage, dans une étape unique d'usinage effectif par honage de précision, à l'aide d'un outil de honage expansible pour produire un alésage usiné par honage de précision;
- dans lequel on enlève par honage par l'usinage effectif par honage de précision au moins 90 % de la sous-dimension résultant du préusinage;
- et dans lequel on utilise un outil de honage avec des corps de coupe à grains fins, qui sont conçus de telle manière qu'une structure superficielle de l'alésage usiné par honage de précision, résultant de l'usinage effectif par honage de précision, corresponde essentiellement ou complètement à la structure superficielle de consigne.

2. Procédé selon la revendication 1, dans lequel on utilise exclusivement des corps de coupe avec des grosseurs de grains moyennes de 35 µm à 91 µm pour l'usinage effectif par honage de précision.

3. Procédé selon la revendication 1 ou 2, dans lequel on exécute l'usinage effectif par honage de précision pour un alésage de diamètre D en un temps de honage H qui satisfait la condition H < 35 s · D/75.

4. Procédé selon l'une quelconque des revendications précédentes, dans lequel on transforme la structure superficielle résultant de l'usinage effectif par honage de précision, essentiellement sans changement de la cote de l'alésage, en structure superficielle de consigne, dans lequel on transforme la structure superficielle résultant de l'usinage effectif par honage de précision en structure superficielle de consigne de préférence par un usinage effectif par honage au plateau et/ou par honage à la brosse.

5. Procédé selon l'une quelconque des revendications précédentes, dans lequel on exécute un usinage final à la suite de l'usinage effectif par honage de précision de telle manière qu'un enlèvement de matière s'élève à moins de 8 µm par rapport au diamètre de l'alésage.

6. Procédé selon la revendication 1, 2 ou 3, dans lequel on exécute l'usinage effectif par honage de précision de telle manière que l'alésage fini présente la cote de consigne et la structure superficielle de consigne.

7. Procédé selon l'une quelconque des revendications précédentes, dans lequel on entraîne, pendant l'usinage effectif par honage de précision, l'outil de honage au moins à l'intérieur d'un intervalle de temps d'usinage de telle manière qu'une vitesse de coupe des corps de coupe par rapport à la surface interne de l'alésage atteigne plus de 90 m/min, dans lequel la vitesse de coupe pendant l'intervalle de temps d'usinage atteint de préférence plus de 120 m/min.

8. Procédé selon l'une quelconque des revendications précédentes, dans lequel, pendant l'usinage effectif par honage de précision, on déplace les corps de coupe de l'outil de honage pendant une première phase d'usinage avec une première vitesse de coupe de plus de 90 m/min et pendant une deuxième phase d'usinage qui suit avec une deuxième vitesse de coupe moins élevée que la première vitesse de coupe, dans lequel la première vitesse de coupe est supérieure à 120 m/min et la deuxième vitesse de coupe est inférieure à 90 m/min.

9. Procédé selon l'une quelconque des revendications précédentes, dans lequel, pendant l'usinage effectif par honage de précision, on approche les corps de coupe de l'outil de honage avec une première vitesse d'approche dans une première phase d'usinage pour produire un premier enlèvement et dans une deuxième phase d'usinage suivant la première phase d'usinage avec une deuxième vitesse d'approche qui est inférieure à la première vitesse d'approche pour produire un deuxième enlèvement, dans lequel on effectue de préférence un premier enlèvement d'au moins 50 µm dans la première phase d'usinage et/ou dans lequel on effectue un deuxième enlèvement de 20 µm au maximum pendant la deuxième phase d'usinage.

10. Procédé selon la revendication 9, dans lequel on déplace les corps de coupe de l'outil de honage avec une vitesse de coupe de plus de 90 m/min au moins temporairement pendant la première phase d'usinage et/ou dans lequel on déplace les corps de coupe avec une vitesse de coupe inférieure à 90 m/min pendant la deuxième phase d'usinage.

11. Procédé selon l'une quelconque des revendications 8 à 10, dans lequel la première phase d'usinage dure au maximum 20 s et la deuxième phase d'usinage dure au maximum 15 s.

12. Procédé selon l'une quelconque des revendications 8 à 11, dans lequel on retire les corps de coupe dans une phase de retrait après la fin de la première phase d'usinage et on les approche pour entamer la deuxième phase d'usinage après la phase de retrait, dans lequel on commande un mouvement de retrait dans la phase de retrait de préférence de telle manière que les faces extérieures abrasives des corps de coupe soient encore en contact matériel avec la surface interne de l'alésage à la fin de la phase de retrait.

13. Procédé selon l'une quelconque des revendications précédentes, dans lequel on approche les corps de coupe de l'outil de honage par commande positive pendant l'usinage effectif par honage de précision.

14. Procédé selon l'une quelconque des revendications précédentes, dans lequel on utilise pour tout l'usinage effectif par honage de précision un outil de honage à expansion simple.

15. Procédé selon l'une quelconque des revendications 1 à 13, dans lequel on effectue le préusinage de l'alésage ainsi que l'usinage effectif par honage de précision de l'alésage préusiné à l'aide d'un outil de honage à expansion double, qui comporte deux groupes de couteaux pouvant être approchés indépendamment l'un de l'autre, dans lequel un premier groupe de couteaux est conçu avec des corps de coupe à grains relativement gros pour le préusinage de l'alésage et un deuxième groupe de couteaux est conçu avec des corps de coupe à grains fins par rapport à ceux-là pour l'usinage effectif par honage de précision de l'alésage préusiné.

16. Procédé selon l'une quelconque des revendications précédentes, dans lequel on utilise une tige d'entraînement rigide pour le couplage de l'outil de honage utilisé pour l'usinage effectif par honage de précision et on soutient la pièce de manière flottante pour l'usinage effectif par honage de précision.

17. Procédé selon l'une quelconque des revendications 1 à 15, dans lequel on utilise une tige flexible pour le couplage de l'outil de honage utilisé pour l'usinage effectif par honage de précision et une articulation unique est disposée entre la tige flexible et l'outil de honage.

18. Procédé selon l'une quelconque des revendications précédentes, dans lequel on procède à une arrivée de lubrifiant de refroidissement à travers l'outil de honage pendant l'usinage effectif par honage de précision.

19. Procédé selon l'une quelconque des revendications précédentes, dans lequel on utilise un outil de honage avec des lames de honage relativement petites, qui présentent une largeur périphérique de 3 mm ou moins, pour l'usinage effectif par honage de précision.

20. Installation d'usinage de précision (100) pour l'usinage de précision d'au moins une surface interne cylindrique (152) d'un alésage dans une pièce, en particulier pour le finissage de surfaces de glissement de cylindres d'un bloc moteur (150), avec au moins une unité de honage (600) avec une broche de honage pouvant être entraînée par un entraînement de broche (620) et un élément de liaison pour la transmission d'un mouvement de rotation de la broche de honage à un outil de honage, **caractérisée en ce que** l'élément de liaison est une tige flexible (610) et **en ce qu'**une articulation (615) est disposée entre la tige flexible et l'outil de honage (650).

21. Installation d'usinage de précision selon la revendication 20, dans laquelle la tige flexible (610) comprend une partie tubulaire, qui présente une pluralité d'ouvertures disposées de façon régulière ou irrégulière et s'étendant sur une partie de la longueur de la partie tubulaire et sur une partie de la périphérie du tube, ou dans laquelle la tige flexible comprend un tube à paroi mince ou un tube en un matériau présentant une faible rigidité de flexion par rapport à un matériau d'acier.

22. Installation d'usinage de précision selon la revendication 20 ou 21, **caractérisée par** un dispositif de commande (380), qui est ou peut être configuré de telle manière que l'outil de honage puisse être entraîné au moins à l'intérieur d'un intervalle de temps d'usinage, de telle manière qu'une vitesse de coupe des corps de coupe par rapport à la surface interne de l'alésage soit supérieure à 90 m/min, dans lequel la vitesse de coupe pendant l'intervalle de temps d'usinage est de préférence supérieure à 120 m/min, dans laquelle en particulier le dispositif de commande est ou peut être configuré de telle manière que les corps de coupe de l'outil de honage puissent être déplacés avec une première vitesse de coupe supérieure à 90 m/min dans une première phase d'usinage et avec une deuxième vitesse de coupe, inférieure à la première vitesse de coupe, pendant une deuxième phase d'usinage qui suit.

23. Installation d'usinage de précision selon l'une quelconque des revendications 20 à 22, **caractérisée en ce que** l'outil de honage présente des corps de coupe d'une grosseur de grains moyenne de 35 µm à 91 µm, dans laquelle l'outil de honage est de préférence un outil de honage à expansion simple, qui comprend exclusivement des corps de coupe d'une grosseur de grains moyenne de 35 µm à 91 µm.

24. Installation d'usinage de précision selon l'une quelconque des revendications 20 à 23, **caractérisée en ce qu'**elle comporte une unité de honage (600), qui est conçue aussi bien pour un préusinage de l'alésage dans une étape de préusinage effectif par honage de dégrossissage, que pour un usinage effectif par honage de précision de l'alésage préusiné, dans laquelle l'outil de honage (650) est un outil de honage à expansion double et comprend deux groupes de couteaux avec des lames de honage de grosseurs de grains différentes, pouvant être approchés indépendamment l'un de l'autre, dans laquelle un premier groupe de couteaux comporte des lames de honage (652) avec des grosseurs de grains moyennes comprises dans la plage de 91 µm à 251 µm et un deuxième groupe de couteaux comporte des lames de honage (654) avec des grosseurs de grains moyennes comprises dans la plage de 35 µm à 91 µm.
